# EUROPEAN PATENT APPLICATION

(11) **EP 1 332 791 A2**
(43) Date of publication of application: **06.08.2003**
(21) Application number: 03380008.7
(22) Date of filing: 22.01.2003
(51) Int. Cl.: B01D 61/14, B01D 17/02, B01D 61/58, B01D 65/02, C02F 1/44

(54) **Physically and chemically emulsified hydrocarbon waters separator for ship's bilges**

(30) Priority: 25.01.2002 ES 200200951
(71) Applicant: Facet Ibérica, S.A., 15142 Arteixo (A Coruna) (ES)
(72) Inventor: Vázquez Pérez, Camilo, 15142 Arteixo (A Coruna) (ES); Saavedra Pereira, José, 15142 Arteixo (A Coruna) (ES)
(74) Representative: Ungria Lopez, Javier

(57) **Abstract**

The separator is intended to separate hydrocarbons emulsified in water, both physically and chemically, being based on a combination of two technologies, one of them corresponding to gravimetric separation of the hydrocarbon from the water and the other corresponding to ultrafiltration in membranes. The gravimetric separation unit (1) includes a pack of facet mpack coalescent plates, while the ultrafiltration unit (5) includes a series of membranes (6) via which passes the mixture of water exempt from free hydrocarbon which has been separated in the gravimetric unit (1). The separator finds special application in ship bilges and, as well as carrying out separation of free hydrocarbon in a current of water, also performs the separation of the emulsified hydrocarbon, having automatic functioning.

## Description

### OBJECT OF THE INVENTION

The present invention, as it is expressed in this descriptive report, refers to a physical and chemically emulsified hydrocarbon/water separator, constructed to separate emulsified hydrocarbons in water, allowing the separation of the free hydrocarbon from a water stream, as well as the emulsified hydrocarbon, on the basis of the combination of two separation techniques: on one hand, the gravimetric separation through coalescent plates and, on the other hand, the separation through ultrafiltration membranes, selfcleanable counter-flow.

The separator is automatic, which operates electrically and selfsupported in its own soleplate. It is applicable to most industries in all cases and practical circumstances in which it is necessary to separate hydrocarbons or mineral oils and water mixtures, although its foreseen preferential application is in ship bilges.

### BACKGROUND OF THE INVENTION

When it becomes necessary to make a separation of emulsions in a water-hydrocarbons mixture, the most generalised separation process is based on pH modification in order to break emulsions through the insertion of acid and/or basic components. This makes it possible to separate hydrocarbon from water.

The problem that arises from this process is the measurement of the reagents, since the quantity of each one of these reagents will be in relation to the components and pH of the sample to be separated, requiring expensive regulation and maintenance systems.

### DESCRIPTION OF THE INVENTION

The purpose of the emulsions separator invention is based on the combination of two technologies, one being to the gravimetric separation of hydrocarbons from water, and the other corresponding to the ultrafiltration in membranes. This way, in a first stage, the separation process by gravity through the use of a coalescent plate separator allows the elimination of all water-free hydrocarbon, reaching concentrations below 15 ppm. In the second stage the separation of the emulsified hydrocarbon is obtained in the membranes; all done with no need of breaking the emulsion by means of pH modification and the necessity of using reagents.

Basically, the separator comprises a gravimetric separation unit of hydrocarbon waters, with the Facet Mpack Coalescent Plates Pack. This unit receives the mixture of hydrocarbon water to be treated, by the positioning a pump, separating the free hydrocarbon from the water. The separator also includes a second separation unit of ultrafiltration through membranes, that receives the water coming from the gravimetric unit, that is to say without free hydrocarbons, which separates the emulsified hydrocarbons.

Besides these two basic separation units, the separator includes a control panel that controls the operation of all elements and/or devices of the separator, as well as a pump for the recirculation of the water-emulsified hydrocarbon mixture through the self-filtration unit as well as a pump to send the separated hydrocarbons in the gravimetric unit to the corresponding deposit of free hydrocarbons collecting tank.

Equally, the separator comprises a phase detector, which determines the quantity of accumulated hydrocarbon at the top part of the gravimetric unit, so that with the activation of the control panel, the suction pump of water mixture can be stopped, as well as the inlet of this separation unit (depending on the quantity of accumulated hydrocarbon). In this case, the hydrocarbon pump will start to operate, opening a valve at the same time that allows the penetration of clean water to push the separated hydrocarbons to the collecting storage deposit.

Also included are several valves, filters, and so on, including a flow meter, pressure and temperature transmitters, means for drainage, sluiceways and separated product collecting facilities, as well as facilities that render possible the counter-flow cleaning of the membranes corresponding to the ultrafiltration unit. This cleaning is made with fresh water for the regeneration of the membranes.

The separator is automatic and regulated by a control panel that determinates the activation of the electric pumps, as well as the opening/closing of the valves depending on the signals received by the hydrocarbon sensors or detectors and/or by a hydrocarbon analyser that also belongs to the separator.

The separator is valid either for the applications that consist in the discharge of purified water through the gravimetric unit with a hydrocarbon content below the established values by the present regulations, and for the applications consisting in the reuse of the separated hydrocarbons.

### DESCRIPTION OF THE DRAWINGS

As a complement to the following description, and with the aim of obtaining a better comprehension of the features of this invention, a drawing is enclosed with this descriptive report, which schematically represents the installation of the circuit corresponding with the emulsions separator made in accordance with the invention purpose.

### DESCRIPTION OF THE PREFERRED EMBODIMENT OF THE INVENTION

Looking at the aforementioned description, it can be observed that the emulsions separator is based on the combination of two different separation technologies: gravimetric and ultrafiltration.

The gravimetric separation unit (1) located in a receptive tank (2) for the hydrocarbon water mixture, through the line (3), includes a Facet Mpack Coalescent Plates Pack, which makes up the separation unit (1), that sucks up the hydrocarbon water mixture by a pump (4)

The ultrafiltration separation unit (5) includes membranes (6), so that this separation unit (5) accesses the water mixture driven by a pump (7), and this water is free from hydrocarbons since these hydrocarbons have been previously separated in the gravimetric unit (1).

The separator also includes a control panel (8) which controls the operation of all the components and devices described, as well as a hydrocarbon meter (9) located on the outlet side (10) of hydrocarbon free, clean water.

The free hydrocarbons obtained in the separation unit (1) and the emulsified hydrocarbons obtained in the separation unit (5) enter a common collector (11), that belongs to the same separator.

According to these main components and others that will be mentioned in the present description, the separator operation is as it follows:

The mixture of hydrocarbon water to be treated is sucked by the pump (4) introduced in the reception tank (2) through the suction pipe (3), bearer of the gravimetric separation unit (1). This mixture of water with hydrocarbons goes through the Facet Mpack Coalescent Plates that makes up this unit (1), so that due to the existing laminar flow in these Coalescent Plates where the separation of the hydrocarbon free of water takes place, and which is accumulated due to its inferior weight, on the top part (12) where a phase detector (13) has been provided to asses the quantity of accumulated hydrocarbons in this top part (12).

When the quantity of free hydrocarbons exceeds the maximum established value, the phase detector (13), sends a signal to the control panel (8) carrying out the following operation:
- The pump (4) stops, therefore detaining the inlet of hydrocarbon water mixture to the reception tank (2).
- The operation of a pump (14), from now on called 'hydrocarbon pump', which discharges the free hydrocarbons separated via the gravimetric unit (1) to the common discharge pipe (11) that goes directly into the hydrocarbon collector or tank, or a fresh water inlet automatic valve opens, and this way allows the water to push the hydrocarbon through its discharge connection to the hydrocarbon accumulation collector tank provided at the end of the pipeline (11).

Once the hydrocarbon is out of the gravimetric separation unit, the phase detector (13) detects the presence of water, sending a signal to the control panel (8), which stops the hydrocarbon pump (14) or closes the fresh water inlet automatic valve, at the same time the suction pipe restarts (4), leaving the separator in its standard operative situation.

This way, the water without free hydrocarbon goes through the pump (4) and to the separation unit by ultrafiltration (5), which has previously passed through the impeller pump (7), with the particular feature that between both pumps (4, 7) there is a solid particles retention filter (15), with a branch (16) where an automatic valve is intercalated to the discharge (17), with the existance of a second branch (18) connected to the filter (15), for the cleaning countercleaning of the same, through a valve (24) provided in the same branch (18), which is connected to the fresh water inlet line (25), in this inlet there is a filter (26) projected and also an automatic valve (27).

In the outlet of the filter (15), and particularly in the line or branch, between the pumps (4, 7) a branch (28) has been provided with a pressure control valve (29) that opens automatically as soon as the pressure increases the maximum value allowed, alleviating the suction of the pump (4).

The mixture of water without free hydrocarbon coming from the tank (2) corresponding to the gravimetric separation unit is powered by a pump (7) through the membranes belonging to the ultrafiltration separation unit (5), so that in this unit all of the particles of hydrocarbon higher than 5 nanometers are retained, being stored in the membranes (6), the water that goes through these membranes already clean of hydrocarbons, is directed through a flow meter (30) and through an automatic valve (31) to the outlet collector provided at the end of the corresponding branch (10). For this reason, this branch (10) is considered as the outlet collector of hydrocarbon clean water, providing a sample probe for continuous analysis discharged water sampling offtake, so when the quantity of hydrocarbon in water measured by the hydrocarbon meter (9) is inferior or equal to the reference value, this meter (9) sends a signal to the control panel (8), producing the opening of the valve (32), at the same time the recirculation valve (33) closes to the inlet tank. However, if the quantity of hydrocarbon in water measured is superior to the reference value, this meter sends a signal to the switchboard (8), closing the clean water discharge automatic valve (32) and opening the recirculation automatic valve (33) to the inlet tank.

Each certaing quantity of liters of discharged water, which have passed through the membranes (6) of the ultrafiltration separation unit (5) and measured by the flow meter (9), or certain number of working hours of the ultrafiltration membrane (5), or when the concentration of hydrocarbon requires it, in all the cases the ultrafiltration unit (5) makes a discharge of the retained concentratrate in the membranes (6).

For this, the control panel (8) closes the automatic valve (31) and opens the automatic valve (34), allowing the discharge of this concentrate to the common pipe (11) corresponding to the hydrocarbon storage collector, previously having passed through the flow meter (35).

When cleaning is necessary, make a counter-cleaning of the ultrafiltration unit (5), for which the fresh water inlet automatic valve (36) is opened, closing valves (31,37, 34), stopping the sucking pump (4) and opening the automatic valve (38), allowing the discharge by gravity of the water from the counter-cleaning to the common pipe of the drainage collector (39) established as a branch in the major conduction (40).

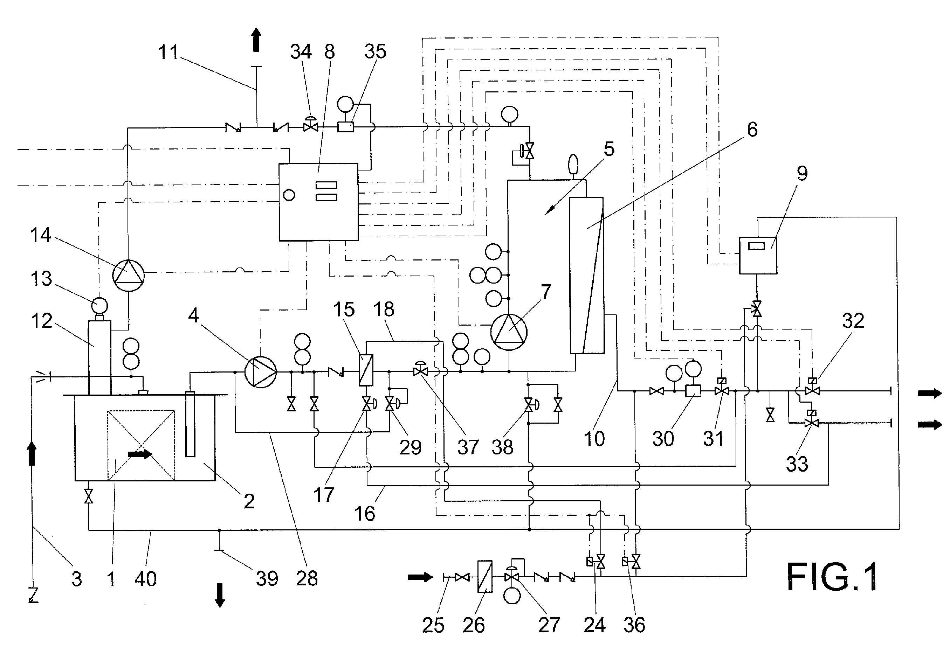

## Claims

1. Physically and chemically emulsified hydrocarbon waters separator for ships' bilges, constructed to separate in an independent way the free hydrocarbon as well as the emulsified hydrocarbon in a mixture of hydrocarbon water, and being applicable preferently in ship's bilges, it is **characterized in that** it comprises two separation units (1, 5), the first one as a gravimetric separation unit with coalescent plates to separate free hydrocarbon in the mixture of hydrocarbon water, while the separation unit (5) has membrane ultrafiltration (6) to separate the emulsified hydrocarbon; provided with a suction pump (4) for the mixture of hydrocarbon water at the entrance, through a pipe (3), in each corresponding tank (2) situated in this gravimetric separation unit (1), including a propeller pump (7) of water without free hydrocarbon, coming from the separation unit (1), for its inlet and passing through the ultrafiltration unit (5), having also a third propeller pump (14) of free hydrocarbon separated in the gravimetric unit (1), for its carriage to a pipe or common collector (11) that flows to a storage tank of this hydrocarbon; including a detector (13) of accumulated free hydrocarbon in the top part of the coalescent plates gravimetric unit (1), as well as a switchboard (8) by means of which it is controlled automatically the functioning of the referred pumps, as well as the valves and other devices projected to allow the inlet of clean water according to the signals emitted as well as by the detector of free hydrocarbon (13) as by water detectors and the ones coming from an hydrocarbon analyser provided in the same separator.

2. Physically and chemically emulsified hydrocarbon waters separator for ships' bilges, according to claim 1, **characterized in that** it comprises a branch or pipe provided between the gravimetric separation unit (1) and the ultrafiltration separation unit (5), between pumps (4, 7); a filter (15) of solid particle retention that carries the mixture of water without the free hydrocarbon, with the particularity that at the outlet of this filter (15) a pressure control valve (29) is provided to eventually free the pump pressure (4); said filter (15) being connected to a branch (18) to clean counter-cleaning, through an automatic valve (24), as well as a discharge branch (16), through another automatic valve (17).

3. Physically and chemically emulsified hydrocarbon waters separator for ships' bilges, according to claim 1, **characterized in that** the ultrafiltration separation unit (5) has an outlet branch (10) of clean water obtained in the passage through the membranes (6) of this unit (5) in which side (10) it is provided with a flow meter (30) and an automatic valve (31); through said valve said clean water is sent to the corresponding outlet collector for its collection in the respective storage tank; with the distinction that in said outlet collector exist a continuous analysis of discharged water sampling offtake; in this branch (10) there is a valve (32) provided in combination with a second valve (33) that closes when the other opens and vice versa, and allows in this last case the recirculation of water to the tank receiver (2) of the mixture of hydrocarbon water.

4. Physically and chemically emulsified hydrocarbon waters separator for ships' bilges, according to any of the preceding claims, **characterized in that** in the outlet branch (10) of the separator unit (5), a diversion with an automatic valve (36) has been foreseen for the intake of drinking water for the backwashing of the membranes (6) of the referenced separator unit (5).

5. Physically and chemically emulsified hydrocarbon waters separator for ships' bilges, according to any of the preceding claims, **characterized in that** the emulsified hydrocarbon obtained in the separator unit (5) reaches the common collector conduit through a branch in which an automatic valve (34) and a flow meter (35) have been foreseen.
